# EUROPEAN PATENT APPLICATION

(11) **EP 1 114 804 A1**
(43) Date of publication of application: **11.07.2001**
(21) Application number: 01100369.6
(22) Date of filing: 05.01.2001
(51) Int. Cl.: C03C 25/12

(54) **Optical fiber coating device and method**

(30) Priority: 06.01.2000 KR 2000000433
(71) Applicant: SAMSUNG ELECTRONICS CO., LTD., Suwon-City, Kyungki-do (KR)
(72) Inventor: Oh, Sung-Koog, Kumi-shi, Kyongsangbuk-do (KR); Seo, Man-Seok, Kumi-shi, Kyongsangbuk-do (KR); Kim, Kyeong-Sup, Kumi-shi,Kyongsangbuk-do (KR)
(74) Representative: Grünecker, Kinkeldey, Stockmair & Schwanhäusser Anwaltssozietät

(57) **Abstract**

Disclosed is an optical fiber coating device having a cooler. The optical fiber coating device having a coater for coating outer circumference of the optical fiber with a coating material, and a gas provider for providing an environmental gas within the coater further comprises a cooler for cooling down the environmental gas provided to the coater by the gas provider.

## Description

The present invention relates generally to an optical fiber drawing device, and in particular, to an optical fiber coating device having a cooler and a method for coating an optical fiber.

In general, an optical fiber is a glass thread materialized of quartz, especially a silica-based glass thread, and diameter thereof is thin as much as a capillus, serving to facilitate its management and installation. The optical fiber comprises a core for irradiating lights into inside thereof, a clad for trapping the lights directed to the inside of the core and a coating for covering the clad. Various information including television images and computer data is converted into optical signals, which are transferred to the optical fiber. Further, the optical fiber, consisting of the glass material, is vulnerable to external tension, sharp bend, and various stresses due to its composition of glass. In particular, the optical fiber is very vulnerable to tension applied in its elevation direction. A destructive tension test is often taken to measure tension-resistance of the optical fiber. The destructive tension test is characterized by longitudinally pulling the optical fiber and measuring how much to the whole length is stretched until before the optical fiber is mechanically damaged. An ordinary optical fiber is known to be stretched approximately 0.5% more than its original length before its breakdown. The coating in the optical fiber is hardly related to an electric wave of optical signals, but regarded as an essential element of the optical fiber because of the aforementioned drawback of the optical fiber. To be specific, the coating protects the core and clad composed of glass from external impacts. The material of the coating is selected from the group consisting of plastics like polyester, ultraviolet-hardened resins, thermal-hardened resins, etc. The coating made of the plastic material is spread on a bare glass by an extrusion method. Here, the bare glass means an uncoated optical fiber, namely, an optical fiber composed of only a core and a clad. Thereafter, the coating applied to the optical fiber in the extrusion manner is hardened by a cooler, such as a cooling reservoir filled with cooling water. The ultraviolet-hardened resins are coated in liquid form on the surface of the bare glass. Then, ultraviolet rays are irradiated to the optical fiber for hardening. The thermal-hardened resins are coated in liquid form on the surface of the bare glass and hardened by applied heat. An optical drawing device using the ultraviolet-hardened resin roughly comprises a furnace, a coating device, an ultraviolet hardener, a capstan, and a spool.

The furnace has a cylindrical shape and applies heat to one end of an optical fiber preform, comprising a core inserted into inside thereof and a clad, in order to melt the optical fiber preform. The optical fiber preform is similar to the bare glass in term of their composition, but its diameter is much greater than that of the bare glass. Also, an inert gas is flowed in inside of the furnace in order to prevent combustion of the inside of the furnace from the heat.

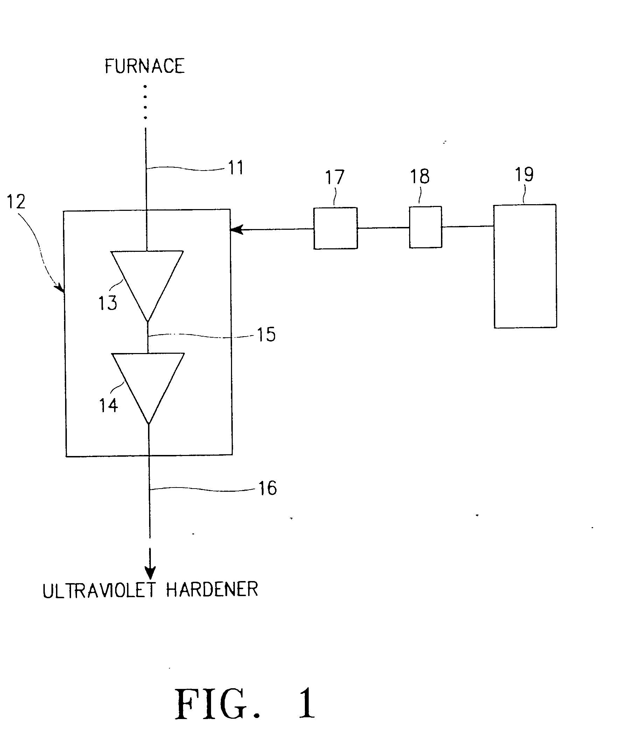

FIG. 1 is a diagram illustrating a construction of a coating device according to a related art. The coating device roughly comprises a coater 12 including a first and second applicators 13 and 14, and annex devices, such as a gas provider 19, a filter 17, a coating material reservoir (not shown), etc. The coater 12 includes a chamber for mounting the first and second applicators 13 and 14 and interrupting their contacts with external atmosphere. A passageway is formed in the inside of the coater 12, so that the bare glass 11 is passing through the passageway. The passageway is filled with an environmental gas provided by the gas provider 19. The first and second applicators 13 and 14 disposed on the passageway are filled with the coating material provided by the coating material reservoir, so as for the bare glass 11 to be actually coated therein. The bare glass 11 is coated while passing through the first and second applicators 13 and 14 where the coating material is gathered. Further, the first and second applicators 13 and 14 are provided to conduct a double coating in consideration of bend property of the optical fiber. The coating material provided for the first applicator 13 has a softer physical property than that provided to the second applicator 14. The coating material in the peripheries of the bare glass 11 or a first coated optical fiber 15 steeped in the first and second applicators 13 and 14 rises along the bare glass 11 or the first coated optical fiber 15 by a surface tension. By this occasion, in a process that the bare glass 11 or the first coated optical fiber steeped in the first and second applicators 13 and 14 is moved by an external cause, the rising coating material captures the environment gas. Also, bubbles generated in the gas capturing process get away from the coater 12, while adhering to the bare glass 11 or the first coated optical fiber 15.

However, the environment gas provided by the gas provider 19 is provided for the purpose of inhibiting the bubble formation. Even though the aforementioned gas capturing can not be interrupted, since the environmental gas dissolves well in the coating material solution, the environmental gas forming the bubbles is absorbed in the coating material solution, resulting in removing the bubbles. This property of the environmental gas is also related to its kinetic viscosity. In other words, as the environmental gas has lower kinetic viscosity, the environmental gas is better absorbed into the coating material solution.

The ultraviolet hardener hardens the optical fiber by irradiating ultraviolet rays into the coating of the optical fiber.

The capstan pulls the optical fiber with a predetermined power, so as to consecutively draw the optical fiber from the optical fiber preform with specific intervals. The spool having a cylindrical reel shape causes the drawn optical fiber wound around outer circumference thereof.

In the meantime, with optical fiber drawing velocity faster for reasons of productivity, required kinetic viscosity of the environmental gas provided to the coating device is accordingly lower. For example, let us suppose that bubbles having the same size as generated when optical fiber drawing velocity is slow are formed within the coating of the optical fiber. As the optical fiber drawing velocity grows faster, the time the coater gets out of is shorter. Therefore, the environmental gas forming the bubbles should be accordingly absorbed into the coating material at ever increasing speed. time the coater gets out of is shortened. If the environmental gas fails to be absorbed into the coating material, thereby remaining behind, the bubbles formed by the environmental gas are kept unchanged and may be hardened within the ultraviolet hardener.

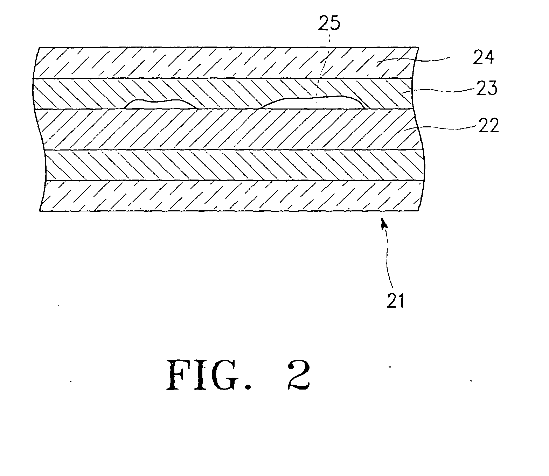

FIG. 2 is a diagram illustrating bubbles remaining behind within a coating of an optical fiber. The bubbles 25 generated for the above reason remain in a first coated coating 23 surrounding outer circumference of a bare glass 22 of an optical fiber 21. Referring to FIG. 2, outward appearance of a second coated coating 24 is preserved, but with heavy remnants, the outer circumference of the optical fiber 21 would be bulged. Or, if the bubbles formed in a coater 12 as shown in FIG. 1 are burst within an ultraviolet hardener positioned on a bottom of the coater 12, the outer circumference of the optical fiber 21 would be dented.

Such defective optical fiber can not be used as likely as before, and the defective portions should be sheared. In case of metal electric wire, impaired portions are preferably sheared. Since the optical fiber made of glass material, more particularly, is very vulnerable to external impact, scratching, tension, etc, the shearing is an essential process.

To prevent the above problems, an environmental gas having quite lower kinetic viscosity should be utilized when optical fiber drawing velocity is relatively fast. The environmental gas having quite low kinetic viscosity is, for example, CCl₂F₂, Xe, etc. These environmental gases, however, have another problems such as noxiousness, delicate storage, or expensiveness.

It is, therefore, an object of the present invention to provide an optical fiber coating device, and an optical fiber coating method which reduces kinetic viscosity of an environmental gas provided to a coater in order to prevent bubble formation at a high optical fiber velocity.

To achieve the above object, there is provided an optical fiber coating device having a coater for coating the optical fiber and a gas provider for providing an environmental gas within the coater, the optical fiber further comprising a cooler for cooling down the environmental gas provided to the coater by the gas provider.

Furthermore, a method is provided for coating an optical fiber using a coater for coating an optical fiber and providing an environmental gas within the coater characterized by cooling down the environmental gas provided to the coater.

The above and other objects, features and advantages of the present invention will become more apparent from the following detailed description when taken in conjunction with the accompanying drawings, in which:
FIG. 1 is a diagram illustrating a construction of a coating device according to the related art;
FIG. 2 is a diagram illustrating bubbles remaining behind within a coating of an optical fiber;
FIG. 3 is a diagram illustrating an optical fiber coating device having a cooler according to a preferred embodiment of the present invention; and
FIG. 4 is a graph illustrating kinetic viscosity of various environmental gases according to thermal variance.

A preferred embodiment of the device and method of the present invention will be described herein below with reference to the accompanying drawings. In the following description, well-known functions or constructions are not described in detail since they would obscure the invention in unnecessary detail.

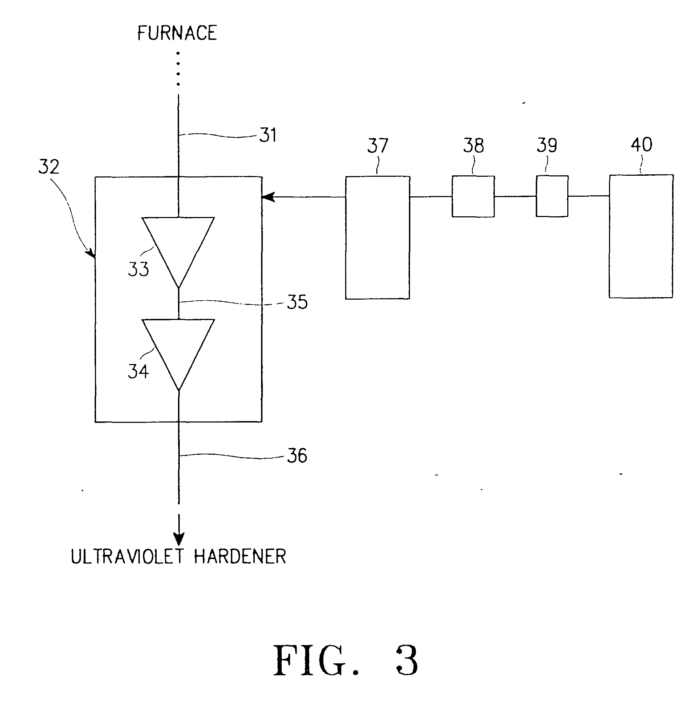

FIG. 3 is a diagram illustrating an optical fiber coating device having a cooler according to a preferred embodiment of the present invention. The optical fiber coating device in FIG. 3 further includes a cooler 37 between a coater 32 and a filter as compared with the optical fiber coating device in FIG. 1. A gas provider 40 provides an environmental gas, such as carbon dioxide, or hydrogen, which is comparatively inexpensive and indelicate for use. As the gas provider 40, a hydrogen tank or an oxygen tank can be used. The hydrogen tank liquefies and reclassifies air for use, in general. To be specific, after pressurizing and then inflating air into a fluid, the hydrogen tank classifies the fluid depending on different boiling points of oxygen and hydrogen. The liquid hydrogen is first evaporated, the evaporated hydrogen is then pressurized, and thereafter the liquid hydrogen is stored in the hydrogen tank. Since the pressurized hydrogen stored within the hydrogen tank is under high pressure, the hydrogen used for the gas provider according to the present invention should be decompressed with a necessary pressure. A gas controller 39 acts as a decompresser for the gas provider. The gas passed through the gas controller 39 is injected into a filter 38, which removes minute impurities contained in the gas, so as to provide a purified gas to the cooler 37. The cooler 37 reduces a temperature of the provided gas to a pre-set degree to provide the low-temperature gas to the coater 32. The cooler 37 is, for example, classified into an air cooling cooler for cooling by means of circulating air, and a water cooling cooler for cooling by means of circulating water.

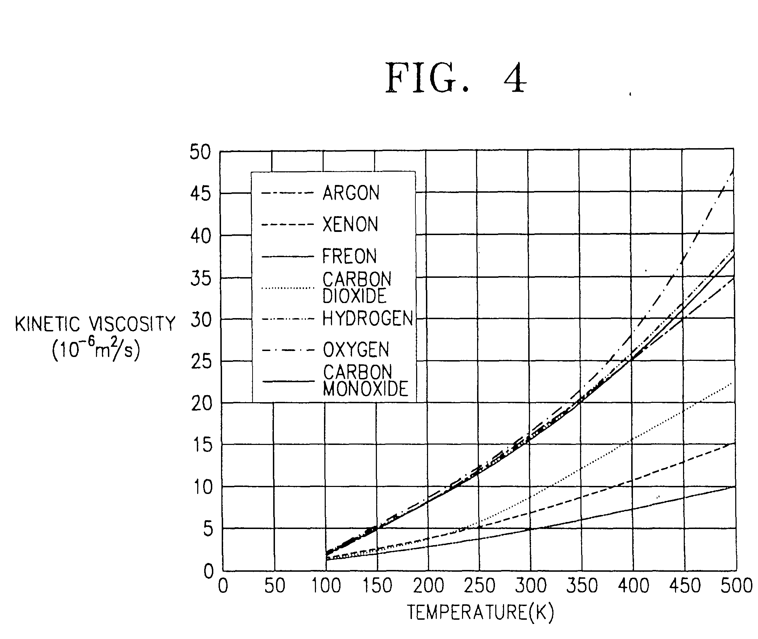

FIG. 4 is a graph illustrating kinetic viscosity of various gases according to a temperature variance. As shown in FIG. 4, at a room temperature, kinetic viscosity of CCl₂F₂ or Xe is higher than that of carbon dioxide or hydrogen. However, as the temperature decreases, difference of the kinetic viscosity values between CCl₂F₂ or Xe and carbon dioxide or hydrogen is found to be reduced. The present invention is based on the resultant temperature-dependence of kinetic viscosity. Thus, the present invention employs carbon dioxide or hydrogen as a cooling agent, which is relatively inexpensive and indelicate for treatment, while obtaining a similar effect as when using CCl₂F₂ or Xe. Especially, carbon dioxide has almost similar kinetic viscosity to CCl₂F₂ or Xe below 250K or less.

As stated above, an optical fiber coating device having a cooler according to the present invention has an advantage of enabling to use an environmental gas inexpensive, and indelicate for treatment as well as having relatively low kinetic viscosity, by cooling down the environmental gas, thereby reducing kinetic viscosity of the gas.

Further, an optical fiber coating device having a cooler according to the present invention has another advantage of providing an environmental gas having kinetic viscosity low enough to cope with a high velocity optical fiber drawing.

While the invention has been shown and described with reference to a certain preferred embodiment thereof, it will be understood by those skilled in the art that various changes in form and details may be made therein without departing from the spirit and scope of the invention as defined by the appended claims.

## Claims

1. An optical fiber coating device having a coater for coating an optical fiber and a gas provider for providing an environmental gas within the coater,
**characterized by**
the device comprising a cooler for cooling down the environmental gas provided to the coater by the gas provider.

2. The device of claim 1, further comprising a gas controller for controlling the amount of gas provided by the gas provider, and a filter for removing impurities contained in the gas provided by the gas provider.

3. The device of claim 1 or 2, wherein the gas is selected from the group consisted of air, hydrogen, argon, and carbon dioxide.

4. The device of one of claims 1 to 3, wherein the cooler cools down the temperature of the gas to the degree of 100 to 300 K.

5. The device of one of claims 1 to 4, wherein the cooler is an air cooling cooler.

6. The device of one of claims 1 to 5, wherein the cooler is a water cooling cooler.

7. A method for coating an optical fiber using a coater for coating an optical fiber and providing an environmental gas within the coater,
**characterized by**
cooling down the environmental gas provided to the coater.

8. A method of claim 7, wherein the environmental gas is cooled down to a temperature of 100 to 300 K.

9. A method of claim 7 or 8, wherein the gas provided to the optical coater is filtered for removing impurities contained in the gas.

10. Method of one of claims 7 to 10, wherein the environmental gas is air, hydrogen, argon, or carbon dioxide.
